# EUROPÄISCHE PATENTSCHRIFT

(11) **EP 2 881 149 B1**
(45) Veröffentlichungstag und Bekanntmachung des Hinweises auf die Patenterteilung: **28.02.2018**
(21) Anmeldenummer: 13195659.1
(22) Anmeldetag: 04.12.2013
(51) Int. Cl.: A62C 99/00, G01M 3/28

(54) **Sauerstoffreduzierungsanlage sowie Verfahren zum Betreiben einer Sauerstoffreduzierungsanlage**
Oxygen reduction system and method for operating an oxygen reduction system
Installation de réduction d'oxygène et procédé de fonctionnement d'une installation de réduction d'oxygène

(43) Veröffentlichungstag der Anmeldung: 10.06.2015
(73) Patentinhaber: Amrona AG, 6304 Zug (CH)
(72) Erfinder: Wagner, Torsten, 29323 Wietze/Hornbostel (DE)
(74) Vertreter: Rupprecht, Kay

(56) Entgegenhaltungen:
- WO-A1-2008/046675
- DE-A1-102010 050 505
- US-A- 5 971 080

## Beschreibung

Die vorliegende Erfindung betrifft ein Verfahren zum Betreiben einer Sauerstoffreduzierungsanlage nach dem Oberbegriff des unabhängigen Patentanspruches 1.

Demgemäß betrifft die Erfindung insbesondere ein Verfahren zum Betreiben einer Sauerstoffreduzierungsanlage, welche eine Inertgasquelle zum Bereitstellen eines sauerstoffreduzierten Gasgemisches bzw. Inertgases und ein Leitungssystem aufweist. Das Leitungssystem der Sauerstoffreduzierungsanlage ist mit der Inertgasquelle und mit mindestens einem umschlossenen Bereich strömungsmäßig verbunden oder verbindbar, um bedarfsweise mindestens ein Teil des von der Inertgasquelle bereitgestellten Gasgemisches bzw. Gases zu dem mindestens einen umschlossenen Bereich zuzuführen. Dabei ist vorgesehen, dass im normalen Betrieb der Sauerstoffreduzierungsanlage mindestens ein Teil des von der Inertgasquelle bereitgestellten Gasgemisches bzw. Gases über das Leitungssystem zu dem mindestens einen umschlossenen Bereich derart zugeführt wird, dass der Sauerstoffgehalt in der Atmosphäre des umschlossenen Bereiches einen vorab festgelegten oder festlegbaren und im Vergleich zum Sauerstoffgehalt der normalen Umgebungsluft reduzierten Wert annimmt.

Die Erfindung betrifft ferner eine Sauerstoffreduzierungsanlage zum geregelten Reduzieren des Sauerstoffgehaltes in der Atmosphäre eines umschlossenen Bereiches, wobei die Sauerstoffreduzierungsanlage eine Inertgasquelle zum Bereitstellen eines sauerstoffreduzierten Gasgemisches bzw. eines Inertgases und ein Leitungssystem aufweist, welches mit der Inertgasquelle und mit dem umschlossenen Bereich strömungsmäßig verbunden oder verbindbar ist, um bedarfsweise mindestens einen Teil des von der Inertgasquelle bereitgestellten Gasgemisches bzw. Gases dem umschlossenen Bereich zuzuführen.

Das erfindungsgemäße Verfahren bzw. die erfindungsgemäße Anlage dient beispielsweise zur Minderung des Risikos und zum Löschen von Bränden in einem zu überwachenden Schutzraum, wobei zur Brandverhütung bzw. zur Brandbekämpfung der umschlossene Raum auf unterschiedlichen Absenkungsniveaus dauerinertisiert wird.

Als weitere Anwendungsbespiele für das erfindungsgemäße Inertisierungsverfahren sei das Bereitstellen von Trainingsbedingungen zum Hypoxie-Training in einem umschlossen Raum genannt, bei dem der Sauerstoffgehalt reduziert ist. In solch einem Raum ist ein Training unter künstlich hergestellten Höhenbedingungen möglich, welches auch als "normobares Hypoxie-Training" bezeichnet wird. Weiter sei als Anwendungsbeispiel die Lagerung von Gegenständen, insbesondere Lebensmitteln vorzugsweise Kernobst, unter einer sogenannten "Controlled Atmosphere (CA)" genannt, in der unter anderem der prozentual anteilige Luftsauerstoff geregelt wird, um den Alterungsprozess leicht verderblicher Waren zu verlangsamen.

Dem Grundprinzip der Inertisierungstechnik zur Brandverhütung liegt die Erkenntnis zu Grunde, dass in umschlossenen Räumen, die nur gelegentlich von Mensch oder Tier betreten werden, und deren Einreichung sensibel auf Wassereinwirkung reagiert, der Brandgefahr dadurch begegnet werden kann, dass die Sauerstoffkonzentration in dem betroffenen Bereich auf einen Wert von beispielsweise etwa 15 Vol.-% abgesenkt wird. Bei einer solchen (reduzierten) Sauerstoffkonzentration können sich die meisten brennbaren Materialien nicht mehr entzünden. Haupteinsatzgebiete der Inertisierungstechnik zur Brandverhütung sind dementsprechend auch EDV-Bereiche, elektrische Schalt- und Verteilerräume, umschlossene Einrichtungen sowie Lagerbereiche mit insbesondere hochwertigen Wirtschaftsgütern.

Die bei diesem Verfahren resultierende Brandverhütungswirkung beruht auf dem Prinzip der Sauerstoffverdrängung. Normale Umgebungsluft besteht bekanntlich zu 21 Vol.-% aus Sauerstoff, zu 78 Vol.-% aus Stickstoff und zu 1 Vol.-% aus sonstigen Gasen. Zur Brandverhütung wird durch Einleiten des sauerstoffverdrängenden Gases, wie beispielsweise Stickstoff, der Sauerstoffanteil in der Raumatmosphäre des umschlossenen Raumes verringert. Es ist bekannt, dass eine Brandverhütungswirkung bereits dann einsetzt, wenn der Sauerstoffanteil unter etwa 15 Vol.-% sinkt. Abhängig von den in dem Schutzraum vorhandenen brennbaren Materialien kann ein weiteres Absenken des Sauerstoffanteils auf beispielsweise 12 Vol.-% erforderlich sein.

Die Druckschrift WO 2008/046675 A1 betrifft ein Verfahren, mit welchem die Luftdichtigkeit eines umschlossenen Raumes bestimmt werden kann, wobei sich dieser Raum insbesondere für den Einsatz der vorstehend beschriebenen Inertgasfeuerlöschtechnik eignet. Hierzu ist vorgesehen, dass zunächst ein Konzentrationsgefälle zwischen der Raumluftatmosphäre des umschlossenen Raumes und der Umgebungsluftatmosphäre eingestellt wird, und zwar indem die Stoffkonzentration von zumindest einem Bestandteil der Raumluftatmosphäre, insbesondere von Sauerstoff, auf einen Wert eingestellt wird, der verschieden von dem entsprechenden Wert der Stoffkonzentration des zumindest einen Bestandteils in der Umgebungsluftatmosphäre ist. Anschließend wird eine Konzentrationsänderungsrate bestimmt, indem in der Raumluftatmosphäre die zeitliche Änderung der Stoffkonzentration des zumindest einen Bestandteils erfasst wird. Schließlich wird ein Luftdichtigkeitswert des umschlossenen Raumes unter Berücksichtigung der ermittelten Konzentrationsänderungsrate berechnet.

Die Druckschrift DE 10 2010 050 505 A1 betrifft ein Verfahren und System zur Dichtheitsprüfung von trockenen Rohrleitungssystemen in Brandbekämpfungsanlagen, insbesondere in Schienenfahrzeugen, mit: Erzeugen eines Gas-Überdrucks in dem Rohrleitungssystem, Erfassen eines Ist-Gasdruckes und/oder eines Ist-Gasvolumenstroms in dem Rohrleitungssystem, Vergleichen des erfassten Ist-Gasdruckes mit einem Soll-Gasdruck und/oder Vergleichen des erfassten Ist-Gasvolumenstroms mit einem Soll-Gasvolumenstrom. Um eine Leckage zu detektieren, wird vorgeschlagen, ein Warn-Signal auszugeben, sollte der Ist-Gasdruck von dem Soll-Gasdruck abweichen.

Eine Sauerstoffreduzierungsanlage der eingangs genannten Art ist dem Prinzip nach aus dem Stand der Technik bekannt. Beispielsweise wird in der Druckschrift DE 198 11 851 A1 eine Inertisierungsanlage beschrieben, welche ausgelegt ist, den Sauerstoffgehalt in einem umschlossenen Raum auf ein bestimmtes Grundinertisierungsniveau abzusenken, und im Falle eines Brandes den Sauerstoffgehalt rasch auf ein bestimmtes Vollinertisierungsniveau weiter abzusenken.

Unter dem hierin verwendeten Begriff "Grundinertisierungsniveau" ist ein im Vergleich zum Sauerstoffgehalt der normalen Umgebungsluft reduzierter Sauerstoffgehalt zu verstehen, wobei allerdings dieser reduzierte Sauerstoffgehalt noch keinerlei Gefährdung von Personen oder Tieren bedeutet, so dass diese - zumindest kurzzeitig - den dauerinertisierten Bereich noch problemlos, d.h. ohne besondere Schutzmaßnahmen wie beispielsweise Sauerstoffmasken, betreten könnten. Das Grundinertisierungsniveau entspricht beispielsweise einem Sauerstoffgehalt in dem umschlossenen Bereich von 15 bis 17 Vol.-%.

Hingegen ist unter dem Begriff "Vollinertisierungsniveau" ein im Vergleich zum Sauerstoffgehalt des Grundinertisierungsniveaus weiter reduzierter Sauerstoffgehalt zu verstehen, bei welchem die Entflammbarkeit der meisten Materialien bereits soweit herabgesetzt ist, dass sich diese nicht mehr entzünden können. Abhängig von der in dem betroffenen Bereich vorhanden Brandlast liegt das Vollinertisierungsniveau in der Regel bei etwa 12 bis 14 Vol.-% Sauerstoffkonzentration.

Um einen umschlossenen Bereich mit einer Sauerstoffreduzierungsanlage auszurüsten, ist zum einen eine entsprechende Inertgasquelle vorzusehen, um das in den umschlossenen Raum einzuleitende, sauerstoffreduzierte Gasgemisch bzw. Inertgas bereitstellen zu können. Die Abgabekapazität der Inertgasquelle, d.h. die pro Zeiteinheit von der Inertgasquelle bereitstellbare Menge an Inertgas, sollte dabei Eigenschaften des umschlossenen Bereiches, insbesondere an das Raumvolumen und/oder die Luftdichtigkeit des umschlossenen Bereiches, ausgelegt sein. Kommt die Sauerstoffreduzierungsanlage als (präventive) Brandschutzmaßnahme zum Einsatz, ist insbesondere sicherzustellen, dass im Brandfall innerhalb kürzester Zeit eine hinreichende Menge an Inertgas in die Raumatmosphäre des umschlossenen Bereiches eingeleitet werden kann, damit möglichst zügig eine Löschwirkung eintritt.

Zwar könnte das im Bedarfsfall in den umschlossenen Bereich einzuleitende, sauerstoffreduzierte Gasgemisch bzw. Inertgas im Prinzip in einer Hochdruckflaschenbatterie gelagert werden, allerdings hat es sich in der Praxis durchgesetzt, zumindest einen Teil des von der Inertgasquelle bereitzustellenden sauerstoffreduzierten Gasgemisches vor Ort zu produzieren, insbesondere deshalb, weil die Lagerung von Inertgas in Gasflaschenbatterien besondere bauliche Maßnahmen erfordert.

Um zumindest einen Teil des von der Inertgasquelle bereitzustellenden, sauerstoffreduzierten Gasgemisches bzw. Inertgases vor Ort produzieren zu können, weist die Inertgasquelle in der Regel ein Kompressorsystem sowie ein am druckseitigen Ausgang des Kompressorsystems angeschlossenes Gasseparationssystem auf. In dem Kompressorsystem wird ein Anfangsgasgemisch komprimiert und in dem mit dem Kompressorsystem strömungsmäßig verbundenen Gasseparationssystem wird zumindest ein Teil des in dem komprimierten Anfangsgasgemisches enthaltenen Sauerstoffs abgetrennt, so dass an einem Ausgang des Gasseparationssystems ein sauerstoffreduziertes Gasgemisch bereitgestellt wird.

Unter dem hierin verwendet Begriff "Anfangsgasgemisch" ist allgemein ein Gasgemisch zu verstehen, welches neben dem Bestandteil Sauerstoff insbesondere noch Stickstoff und ggf. weitere Gase, wie beispielsweise Edelgase aufweist. Als Anfangsgasgemisch kommt beispielsweise normale Umgebungsluft in Frage, d.h. ein Gasgemisch, welches zu 21 Vol.-% aus Sauerstoff, zu 78 Vol.-% Stickstoff und zu 1 Vol.-% aus sonstigen Gasen besteht. Denkbar ist allerdings auch, dass ein Teil der in dem umschlossenen Bereich enthaltenen Raumluft als Anfangsgasgemisch verwendet wird, wobei diesem Raumluftanteil vorzugsweise noch Frischluft beigemischt ist.
Zur anlagentechnischen Realisierung eines mit einer Sauerstoffreduzierungsanlage ausgerüsteten, umschlossenen Bereiches ist es insbesondere erforderlich, ein Leitungssystem bereitzustellen, über welches das von der Inertgasquelle bereitgestellte, sauerstoffreduzierte Gasgemisch bzw. Inertgas bei Bedarf dem umschlossenen Bereich zugeführt werden kann. Hierbei ist es nicht unüblich, dass mit dem Leitungssystem nicht nur ein einziger Raum strömungsmäßig mit der Inertgasquelle verbunden werden kann; vielmehr werden mit dem Leitungssystem häufig mehrere Räume an die Inertgasquelle der Sauerstoffreduzierungsanlage angeschlossen, um mehrere Räume beispielsweise eines Gebäudes mit einer einzigen Sauerstoffreduzierungsanlage bei Bedarf inertisieren zu können. Insofern ist insbesondere bei größeren Sauerstoffreduzierungsanlagen das Leitungssystem als ein zum Teil recht komplex aufgebautes Gasleitungsnetz ausgeführt.
Der vorliegenden Erfindung liegt die Aufgabe zugrunde, eine Sauerstoffreduzierungsanlage bzw. ein Verfahren zum Betreiben einer Sauerstoffreduzierungsanlage anzugeben, bei welcher sichergestellt ist, dass ohne gesonderte Prüfung die anlagentechnischen Standards eingehalten werden. Als Standards gelten in diesem Zusammenhang insbesondere die Einhaltung der jeweiligen Sicherheitsvorschriften und - sollte die Sauerstoffreduzierungsanlage zum Zwecke des präventiven Brandschutzes eingesetzt werden - die Sicherstellung einer hinreichenden Löschmittelversorgung im Brandfall.
Im Hinblick auf das Verfahren wird die der Erfindung zugrunde liegende Aufgabe durch den Gegenstand des unabhängigen Patentanspruches 1 und im Hinblick auf die Sauerstoffreduzierungsanlage durch den Gegenstand des nebengeordneten Patentanspruches 13 gelöst. Vorteilhafte Weiterbildungen des erfindungsgemäßen Betriebsverfahrens sind in den abhängigen Ansprüchen 2 bis 12 und der erfindungsgemäßen Sauerstoffreduzierungsanlage in dem abhängigen Anspruch 14 angegeben.

Zur Lösung der der Erfindung zugrunde liegenden Aufgabe und zum Sicherstellen, dass ohne Durchführung einer gesonderten Prüfung mit der Sauerstoffreduzierungsanlage die entsprechend geltenden anlagentechnischen Standards eingehalten werden, ist erfindungsgemäß vorgesehen, dass die anlagentechnischen Komponenten der Sauerstoffreduzierungsanlage herangezogen werden, um vorzugsweise regelmäßig eine Dichtigkeitsprüfung von mindestens einem Bereich des Leitungssystems durchzuführen. Die Dichtigkeitsprüfung erfolgt durch Abdrücken des im Hinblick auf die Dichtigkeit zu prüfenden Leitungsbereiches mit mindestens einem Teil des von der Inertgasquelle der Sauerstoffreduzierungsanlage bereitgestellten Gasgemisches bzw. Gases.

Die Dichtigkeitsprüfung wird vorzugsweise zu vorgebbaren Zeiten und/oder Ereignissen durchgeführt, wobei dies insbesondere automatisch bzw. wahlweise automatisch erfolgen kann. In diesem Zusammenhang ist es beispielsweise denkbar, dass die Dichtigkeitsprüfung zu einem Zeitpunkt durchgeführt wird, wenn durch geregeltes Zuführen von mindestens einem Teil des von der Inertgasquelle bereitgestellten Gasgemisches bzw. Gases der Sauerstoffgehalt in der Atmosphäre des mindestens einen umschlossenen Bereiches auf den vorab festgelegten oder festlegbaren Wert reduziert worden ist, wobei während der Durchführung der Dichtigkeitsprüfung kein von der Inertgasquelle bereitgestelltes Gasgemisch bzw. Gas über das Leitungssystem dem mindestens einen umschlossenen Bereich zugeführt wird.

Das Abdrücken des im Hinblick auf die Dichtigkeit zu prüfenden Leitungsbereiches des zu der Sauerstoffreduzierungsanlage gehörenden Leitungssystems erfolgt nach der erfindungsgemäßen Lösung durch ein Gas bzw. Gasgemisch, welches von der zu der Sauerstoffreduzierungsanlage gehörenden Inertgasquelle bereitgestellt wird. In einer bevorzugten Realisierung der erfindungsgemäßen Lösung ist in diesem Zusammenhang vorgesehen, dass die Inertgasquelle ein Kompressorsystem und ein dem Kompressorsystem strömungsmäßig nachgeschaltetes Gasseparationssystem aufweist, wobei in einen Eingang des Gasseparationssystems zumindest zeitweilig ein mit dem Kompressorsystem komprimiertes Anfangsgasgemisch eingeleitet wird, und wobei in dem Gasseparationssystem zumindest teilweise eine Auftrennung des komprimierten Anfangsgasgemisches in unterschiedliche Gasbestandteile derart erfolgt, dass an einem Ausgang des Gasseparationssystems ein sauerstoffreduziertes und mit Stickstoff angereichertes Gasgemisch vorliegt. Zur Durchführung der Dichtigkeitsprüfung kann dann wahlweise das von dem Kompressorsystem bereitgestellte, komprimierte Anfangsgasgemisch oder das an dem Ausgang des Gasseparationssystems bereitgestellte und mit Stickstoff angereicherte Gasgemisch verwendet und in den zu prüfenden Bereich des Leitungssystems eingeleitet werden.

Die erfindungsgemäße Lösung eignet sich nicht nur dazu, eine Aussage über die Dichtigkeit des gesamten Leitungssystems der Sauerstoffreduzierungsanlage treffen zu können; vielmehr ist es auch denkbar, eine ggf. vorhandene Undichtigkeit in dem Leitungssystem zu lokalisieren. Hierzu ist es lediglich erforderlich, dass das Leitungssystem über ansteuerbare Ventile in mehrere unmittelbar aneinander angrenzende und über die Ventile voneinander trennbare Bereiche aufgeteilt ist. Mit dieser Maßnahme ist es möglich, dass nacheinander diese unmittelbar aneinander angrenzenden und über Ventile voneinander trennbaren Bereiche des Leitungssystems einzeln auf ihre Dichtigkeit geprüft werden.

Im Hinblick auf die Durchführung der Dichtigkeitsprüfung des Leitungsbereiches des zur Sauerstoffreduzierungsanlage gehörenden Leitungssystems ist gemäß einem Aspekt der vorliegenden Erfindung vorgesehen, dass zunächst ein Durchfluss des von der Inertgasquelle bereitgestellten Gasgemisches bzw. Gases durch das Leitungssystem der Sauerstoffreduzierungsanlage derart abgesperrt wird, dass der im Hinblick auf die Dichtigkeit zu prüfende Bereich des Leitungssystems nach wie vor mit der Inertgasquelle, aber nicht mehr mit dem mindestens einen umschlossenen Bereichs strömungsmäßig verbunden ist. Anschließend wird der im Hinblick auf die Dichtigkeit zu prüfende Leitungsbereich mit zumindest einem Teil des von der Inertgasquelle bereitgestellten Gasgemisches bzw. Gases derart gefüllt, dass ein Überdruck in dem zu prüfenden Leitungsbereich aufgebaut wird. Daraufhin wird erfasst, ob der in dem zu prüfenden Leitungsbereich aufgebaute Überdruck innerhalb einer vorab festgelegten oder festlegbaren Zeitperiode unter einen kritischen Schwellwert fällt.

Um den Durchfluss des von der Inertgasquelle bereitgestellten Gasgemisches bzw. Gases durch das Leitungssystem derart absperren zu können, dass der im Hinblick auf die Dichtigkeit zu prüfende Bereich des Leitungssystems nach wie vor mit der Inertgasquelle, aber nicht mehr mit dem mindestens einen umschlossenen Bereiches strömungsmäßig verbunden ist, bietet es sich an, dass ein entsprechend in dem Strömungsweg vorgesehenes Ventil, insbesondere ein Bereichsventil in dem Leitungssystem, geschlossen wird.

Um die Genauigkeit der Dichtigkeitsprüfung zu erhöhen, ist bei einer Weiterbildung des erfindungsgemäßen Verfahrens vorgesehen, dass zwischen dem Verfahrensschritt des Füllens des zu prüfenden Leitungsbereiches mit dem von der Inertgasquelle bereitgestellten Gasgemisch bzw. Gas und dem Verfahrensschritt des Erfassens der zeitlichen Entwicklung des in dem zu prüfenden Leitungsbereich aufgebauten Überdruckes, eine Zeitverzögerung vorliegt, um zu erreichen, dass sich das in dem zu prüfenden Bereich des Leitungssystems eingebrachte Gasgemisch bzw. Gas strömungsmäßig beruhigen kann.

Die Genauigkeit der Dichtigkeitsprüfung wird insbesondere auch dann erhöht, wenn ein zeitlicher Druckverlauf gemessen und ein ggf. auf eine Undichtigkeit hinweisender Druckabfall erfasst wird, indem der zeitliche Druckverlauf entsprechend analysiert wird. Zur Messung des zeitlichen Druckverlaufes bietet sich insbesondere ein Absolutdruck- oder Differenzdruck-Messsystem an.

Wenn mit dem erfindungsgemäßen Verfahren erfasst wird, dass in dem zu prüfenden Bereich des Leitungssystems eine Undichtigkeit vorliegt, werden/wird vorzugsweise eine entsprechende Störungsmeldung und/oder eine Alarmmeldung ausgegeben. Dies erfolgt insbesondere dann, wenn erfasst wird, dass der in dem zu prüfenden Bereich des Leitungssystems aufgebaute Druck innerhalb einer vorab festgelegten oder festlegbaren Zeitperiode unter einen kritischen Schwellwert fällt.

Nachfolgend werden unter Bezugnahme auf die beiliegenden Zeichnungen Ausführungsbeispiele der erfindungsgemäßen Lösung beschrieben.

Es zeigen:
- Fig. 1:: eine schematische Ansicht einer exemplarischen Ausführungsform der erfindungsgemäßen Sauerstoffreduzierungsanlage; und
- Fig. 2:: eine schematische Ansicht einer weiteren exemplarischen Ausführungsform der erfindungsgemäßen Sauerstoffreduzierungsanlage.

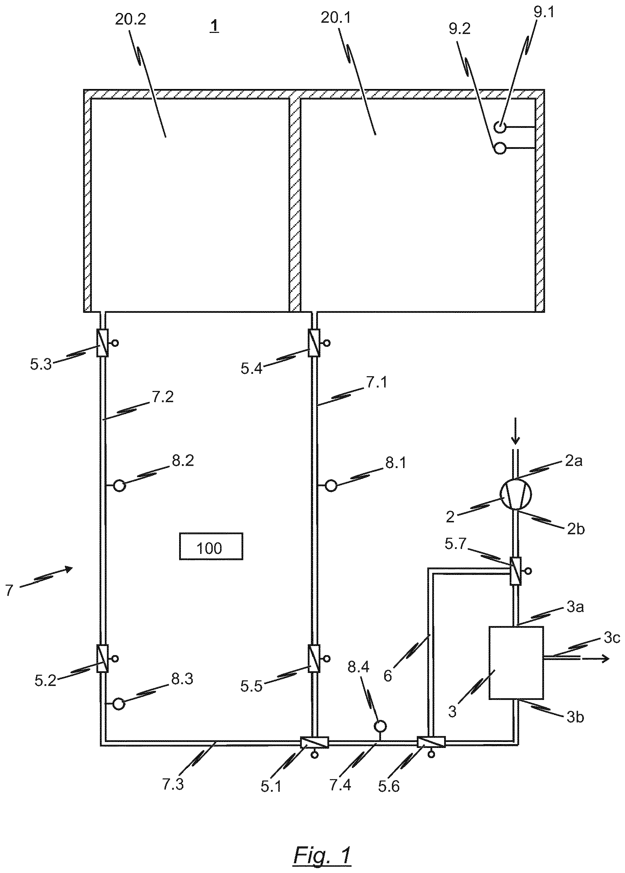

Fig. 1 zeigt in einer schematischen Darstellung eine exemplarische Ausführungsform der erfindungsgemäßen Sauerstoffreduzierungsanlage 1, die bei dieser Ausführungsform dazu dient, um in der Raumatmosphäre von mindestens einem umschlossenen Bereich ein vorgebbares Absenkungsniveau (Inertisierungsniveau) einzustellen und zu halten.

Im Einzelnen dient die in Fig. 1 schematisch dargestellte Sauerstoffreduzierungsanlage 1 als sogenannte Zweibereichsanlage, mit der in insgesamt zwei umschlossenen Bereichen 20.1, 20.2 jeweils ein vorgebbares Absenkungsniveau eingestellt und gehalten werden kann. Die Absenkungsniveaus in den beiden umschlossenen Bereichen 20.1, 20.2 können unabhängig voneinander vorgegeben und entsprechend eingestellt werden.

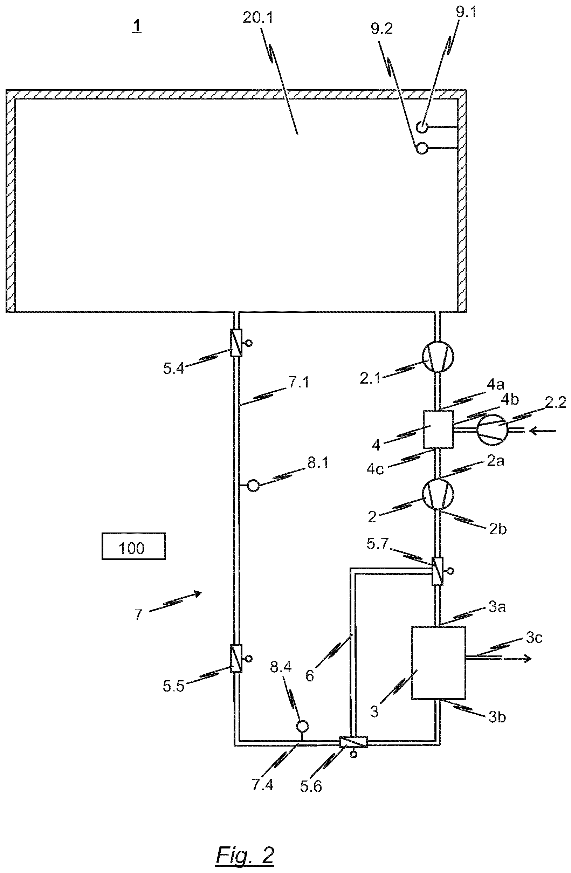

An dieser Stelle ist darauf hinzuweisen, dass die erfindungsgemäße Sauerstoffreduzierungsanlage 1 selbstverständlich auch nur einem einzelnen umschlossenen Bereich oder mehr als zwei umschlossenen Bereichen zugeordnet sein kann. So ist beispielsweise in Fig. 2 eine exemplarische Ausführungsform einer als Einbereichsanlage ausgeführten Sauerstoffreduzierungsanlage 1 gezeigt, mit der nur in einem einzigen umschlossenen Bereichen 20.1 ein vorgebbares Absenkungsniveau eingestellt und gehalten wird.

Unabhängig davon, ob die Sauerstoffreduzierungsanlage als Ein-, Zwei- oder Mehrbereichsanlage ausgeführt ist, kann ein der Sauerstoffreduzierungsanlage 1 zugeordneter, umschlossener Bereich 20.1, 20.2 insbesondere beispielsweise eine Lagerhalle sein, bei welcher insbesondere als präventive Brandschutzmaßnahme der Sauerstoffgehalt in der Raumluft auf ein bestimmtes (Grund-)Inertisierungsniveau von beispielsweise 15 Vol.-% Sauerstoffgehalt abgesenkt und gehalten wird. Selbstverständlich ist aber auch ein anderer (reduzierter) Sauerstoffgehalt in der Raumatmosphäre des der Sauerstoffreduzierungsanlage 1 zugeordneten umschlossenen Bereiches 20.1, 20.2 denkbar.

Die Sauerstoffreduzierungsanlage 1 in der in Fig. 1 dargestellten exemplarischen Ausführungsform weist ein Kompressorsystem 2 auf, mit welchem im Betrieb über dessen Eingang 2a Frischluft als Anfangsgasgemisch eingesaugt wird.

Das Kompressorsystem 2 weist einen Ausgang 2b auf, welcher strömungsmäßig mit einem Eingang 3a eines Gasseparationssystems 3 verbunden, bzw. verbindbar ist. Auf diese Weise kann mit Hilfe des Kompressorsystems 2 dem Gasseparationssystem 3 die Frischluft als Anfangsgasgemisch in komprimierter Form zugeführt werden.

Wie in Fig. 2 angedeutet, ist es in einer Abwandlung der in Fig. 1 gezeigten Ausführungsform aber auch denkbar, eine Rückführung vorzusehen, so dass als Anfangsgasgemisch nicht reine Frischluft, sondern ein Gemisch aus Frischluft und Raumluft verwendet wird. Im Einzelnen ist hierzu bei der in Fig. 2 schematisch dargestellten Ausführungsform der Eingang 2a des Kompressorsystems 2 mit einem Ausgang 4c einer Mischkammer 4 strömungsmäßig verbunden bzw. verbindbar. Die Mischkammer 4 weist zwei Eingänge 4a, 4b auf. Ein erster Eingang 4a der Mischkammer 4 ist über einen Kompressor bzw. Ventilator 2.1 strömungsmäßig mit der Raumatmosphäre des (in Fig. 2 einzigen) umschlossenen Bereiches 20.1 verbunden oder verbindbar.

Übertragen auf die in Fig. 1 dargestellte Ausführungsform, die - im Unterschied zu der in Fig. 2 gezeigten Einbereichsanlage - eine Zwei- bzw. Mehrbereichsanlage zeigt, ist es somit grundsätzlich denkbar, auch bei der in Fig. 1 dargestellten Ausführungsform eine Mischkammer 4 vorzusehen, wobei der Eingang 4a der Mischkammer 4 mit der Raumatmosphäre des ersten und/oder zweiten umschlossenen Bereiches 20.1, 20.2 strömungsmäßig verbindbar ist. Über den Eingang 4a und den Kompressor bzw. Ventilator 2.1 kann dann der Mischkammer 4 in geregelter Weise Raumluft aus dem ersten umschlossenen Bereich 20.1 und/oder dem zweiten umschlossenen Bereich 20.2 zugeführt werden.

Wie in Fig. 2 gezeigt, dient der weitere Eingang 4b der Mischkammer 4 dazu, der Mischkammer 4 bedarfsweise Frischluft zuzuführen. Zu diesem Zweck ist der Mischkammer 4 ein Kompressor- bzw. Ventilatorsystem 2.2 zugeordnet, um Frischluft (Außenluft) anzusaugen und über den Eingang 4b der Mischkammer 4 zuzuführen.

In der Mischkammer 4 wird das Anfangsgasgemisch, welches dem Kompressorsystem 2 zuzuführen ist, bereitgestellt. Das Anfangsgasgemisch kann - wie bei der Ausführungsform gemäß Fig. 1 - entweder reine Frischluft sein, oder aber auch ein Gemisch aus Frischluft und einem Anteil der dem ersten und/oder zweiten umschlossenen Bereich 20.1, 20.2 entnommenen Raumluft.

An dieser Stelle ist darauf hinzuweisen, dass die Mischkammer 4 nicht wesentlich für die vorliegende Erfindung ist, und dass bei einer Realisierung der Erfindung selbstverständlich auch auf die Mischkammer 4 verzichtet werden kann. Wie es im Zusammenhang mit der in Fig. 1 schematisch dargestellten Sauerstoffreduzierungsanlage 1 offenbart ist, ist es insbesondere denkbar, dass über den Eingang 2a des Kompressorsystems 2 direkt Frischluft von außen angesaugt wird. In diesem Fall würde es sich dann bei dem im Kompressorsystem 2 komprimierten Anfangsgasgemisch um reine Frischluft handeln.

Das in Fig. 1 nur schematisch dargestellte Gasseparationssystem 3 dient zum Bereitstellen eines mit Stickstoff angereicherten Gasgemisches am Ausgang 3b des Gasseparationssystems 3. Hierzu ist das Gasseparationssystem 3 ausgelegt, von dem über das Kompressorsystem 2 in komprimierter Weise zugeführten Anfangsgasgemisch zumindest einen Teil des darin enthaltenen Sauerstoffs abzutrennen. Der von dem Anfangsgasgemisch abgetrennte Sauerstoff wird über eine Abgasleitung 3 an die Außenatmosphäre abgegeben. Als Gasseperationssystem 3 kommen üblicherweise Membrangeneratoren oder Stickstoffgeneratoren nach dem VPSA- oder PSA-Prinzip zum Einsatz.

In vorteilhafter Weise ist das Gasseparationssystem 3 ausgelegt, wahlweise in einem VPSA-Modus oder in einem PSA-Modus betrieben zu werden.

Unter einem in einem VPSA-Modus betriebenen Gasseparationssystem ist allgemein eine nach dem Vakuum-Druckwechseladsorptions-Prinzip (engl.: vacuum pressure swing adsorption - VPSA) arbeitende Anlage zum Bereitstellen von mit Stickstoff angereicherter Luft zu verstehen.

Gemäß einer Ausführungsform kommt in der Sauerstoffreduzierungsanlage 1 als Gasseparationssystem 3 ein Membrangenerator oder Stickstoffgenerator zum Einsatz, der nach dem VPSA- oder PSA-Prinzip arbeitet. Hierbei ist es insbesondere im Hinblick auf ein Einsparen von Ressourcen (Energie) denkbar, einen Membrangenerator oder Stickstoffgenerator zu verwenden, der grundsätzlich nach dem VPSA-Prinzip arbeitet, der allerdings im Bedarfsfall in einem PSA-Modus betreibbar ist, d.h. in einem auf dem PSA-Prinzip basierenden Betriebsmodus.

Die Abkürzung "PSA" steht für "pressure swing adsorption", was üblicherweise als Druckwechseladsorptionstechnik bezeichnet wird.

Um den Betriebsmodus des bei der exemplarischen Ausführungsform zum Einsatz kommenden Gasseparationssystems 3 von VPSA auf PSA umschalten zu können, ist vorgesehen, dass der Grad der von dem Kompressorsystem 2 erwirkten Komprimierung des Anfangsgasgemisches entsprechend erhöht wird.

Im Einzelnen ist in diesem Zusammenhang denkbar, dass zunächst ein Anfangsgasgemisch, welches Sauerstoff, Stickstoff und ggf. weitere Komponenten aufweist, in dem Kompressorsystem 2 geeignet komprimiert und dann dem Gaskompressionssystem 3 zugeführt wird, in welchem zumindest ein Teil des in dem komprimierten Anfangsgasgemisch enthaltenen Sauerstoff abgetrennt wird, so dass am Ausgang 3b des Gasseparationssystems 3 ein mit Stickstoff angereichertes Gasgemisch bereitgestellt wird. Dieses am Ausgang 3b des Gasseparationssystems 3 bereitgestellte, mit Stickstoff angereicherte Gasgemisch kann anschließend in die Raumatmosphäre des ersten umschlossenen Bereiches 20.1 und/oder des zweiten umschlossenen Bereiches 20.2 derart eingeleitet werden, dass in dem entsprechenden Bereich 20.1, 20.2 ein vorgebbarer und im Vergleich zur normalen Umgebungsluft reduzierter Sauerstoffgehalt eingestellt und/oder gehalten wird.

Wie in Fig. 1 dargestellt, ist die exemplarische Ausführungsform der erfindungsgemäßen Sauerstoffreduzierungsanlage 1 mit einem Leitungssystem 7 versehen, über welches der Ausgang 3b des Gasseparationssystems 3 strömungsmäßig mit dem ersten und/oder zweien umschlossenen Bereiches 20.1, 20.2 verbindbar ist. Zu diesem Zweck ist am Ausgang 3b des Gasseparationssystems 3 ein erstes Ventil 5.1 vorgesehen. Mit diesem ersten Ventil 5.1 ist ein dem ersten umschlossenen Bereiches 20.1 zugeordneter erster Leitungsabschnitt 7.1 sowie ein dem zweiten umschlossenen Bereiches 20.2 zugeordneter zweiter Leitungsabschnitt 7.2 verbunden. Das am Ausgang 3b des Gasseparationssystems 3 vorgesehene Ventil 5.1 ist ausgelegt, wahlweise den Ausgang 3b des Gasseparationssystems 3 mit dem dem ersten umschlossenen Bereich 20.1 zugeordneten Leitungsabschnitt 7.1 strömungsmäßig zu verbinden, und/oder den Ausgang 3b des Gasseparationssystems 3 mit dem dem zweiten umschlossenen Bereich 20.2 zugeordneten Leitungsabschnitt 7.2 zu verbinden. Andererseits kann das am Ausgang 3b des Gasseparationssystems 3 vorgesehene Ventil 5.1 auch beide Leitungsabschnitte 7.1, 7.2 strömungsmäßig von dem Ausgang 3b des Gasseparationssystems 3 trennen.

In dem dem ersten umschlossenen Bereich 20.1 zugeordneten Leitungsabschnitt 7.1 ist vorzugsweise in der Nähe der Einmündung in den ersten umschlossenen Bereich 20.1 ein weiteres Ventil 5.4 angeordnet, über welches der Leitungsabschnitt 7.1 strömungsmäßig mit dem Inneren des umschlossenen Bereiches 20.1 verbunden werden und daher als Bereichsventil bezeichnet werden kann. In gleicher Weise ist auch ein weiteres (Bereichs-)Ventil 5.3 in dem dem zweiten umschlossenen Bereich 20.2 zugeordneten Leitungsabschnitt 7.2 vorgesehen. Ferner sind in den entsprechenden Leitungsabschnitten 7.1, 7.2 weitere Ventile 5.2, 5.5 vorgesehen. Weitere in Fig. 1 nicht gezeigte Ventile und/oder Abzweigungen beispielsweise zu anderen Verbrauchern sind in den Leitungsabschnitten 7.1, 7.2 ebenfalls denkbar.

Wie dargestellt, unterteilen die in dem Leitungssystem 7 vorgesehenen Ventile 5.1, 5.2, 5.3, 5.4, 5.5 und 5.6 die einzelnen Leitungsabschnitte 7.1, 7.2, 7.3, 7.4 des Leitungssystems 7 in voneinander trennbare Bereiche.

Die erfindungsgemäße Sauerstoffreduzierungsanlage 1 ist ausgelegt, selbstständig das Leitungssystem 7, welches den Ausgang 3b des Gasseparationssystems 3 mit den der Sauerstoffreduzierungsanlage 1 zugeordneten Bereichen 20.1, 20.2 verbindet, im Hinblick auf dessen Dichtigkeit zu prüfen. Wesentlich hierbei ist, dass bei der Dichtigkeitsprüfung auf Standardkomponenten der Sauerstoffreduzierungsanlage 1 zurückgegriffen wird.

Somit kommt bei der erfindungsgemäßen Lösung dem Kompressorsystem 2 und/oder dem Gasseparationssystem 3 eine Doppelfunktion zu: Im normalen Betriebs-Modus der Sauerstoffreduzierungsanlage 1 dient das Kompressorsystem 2 dazu, ein Anfangsgasgemisch auf einen vorab festgelegten oder festlegbaren Grad zu komprimieren und das komprimierte Anfangsgasgemisch dem Gasseparationssystem 3 zuzuführen. Im Gasseparationssystem 3 wird dann ausgehend von dem bereitgestellten, komprimierten Anfangsgasgemisch am Ausgang 3b des Gasseparationssystems 3 ein sauerstoffreduziertes Gasgemisch bzw. Inertgas bereitgestellt, welches bei Bedarf über das Leitungssystem 7 dem ersten und/oder zweiten umschlossenen Bereich 20.1, 20.2 zugeführt wird.

Im Prüf-Modus hingegen dient das Kompressorsystem 2 bzw. das Gasseparationssystem 3 der Sauerstoffreduzierungsanlage 1 dazu, Druckgas bereitzustellen, welches zum Zwecke der Dichtigkeitsprüfung zumindest in einzelne Leitungsbereiche 7.1, 7.2, 7.3, 7.4 des Leitungssystems 7 eingeleitet wird, damit durch Abdrücken dieser Leitungsbereiche 7.1, 7.2, 7.3, 7.4 eine Dichtigkeitsprüfung durchgeführt werden kann.

Wenn beispielsweise die Dichtigkeit des dem ersten umschlossenen Bereich 20.1 zugeordneten Leitungsabschnittes 7.1 zu prüfen ist, wird bei der in Fig. 1 dargestellten exemplarischen Ausführungsform das am Ausgang 3b des Gasseparationssystems 3 vorgesehene Ventil 5.1 so geschaltet, dass der dem ersten umschlossenen Bereich 20.1 zugeordnete Leitungsabschnitt 7.1 strömungsmäßig mit dem Ausgang 3b des Gasseparationssystems 3 in Verbindung steht, während der dem zweiten umschlossenen Bereich 20.2 zugeordnete Leitungsabschnitt 7.2 strömungsmäßig von dem Ausgang 3b des Gasseparationssystems 3 getrennt ist. Zusätzlich wird das weitere in dem dem ersten umschlossenen Bereich 20.1 zugeordneten Leitungsabschnitt 7.1 vorgesehene Ventil 5.4 geschlossen, so dass insgesamt ein Durchfluss des von dem Gasseparationssystem 3 bereitgestellten Gasgemisch zu dem ersten umschlossenen Bereich 20.1 abgesperrt ist. Da allerdings das am Ausgang 3b des Gasseparationssystems 3 vorgesehene Ventil 5.1 den dem ersten umschlossenen Bereich 20.1 zugeordneten Leitungsabschnitt 7.1 strömungsmäßig mit dem Ausgang 3b des Gasseparationssystems 3 verbindet, steht der im Hinblick auf die Dichtigkeit zu prüfende Bereich 7.1 des Leitungssystems 7 nach wie vor mit dem Ausgang 3b des Gasseparationssystems 3 strömungsmäßig in Verbindung. Insbesondere kann somit in dem dem ersten umschlossenen Bereich 20.1 zugeordneten Leitungsabschnitt 7.1 durch Einleiten des von dem Gasseparationssystem 3 bereitgestellten Gasgemisches ein Überdruck aufgebaut werden.

Nachdem sich in dem im Hinblick auf die Dichtigkeit zu prüfenden Bereich 7.1 des Leitungssystems 7 ein gewisser Überdruck aufgebaut hat, wird das am Ausgang 3b des Gasseparationssystems 3 vorgesehene Ventil 5.1 geschlossen, so dass der zu prüfende Leitungsbereich 7.1 des Leitungssystems 7 nicht mehr strömungsmäßig mit dem Ausgang 3b des Gasseparationssystems 3 verbunden ist. Anschließend wird mit einem Druckmesssystem 8.1, insbesondere mit einem Absolutdruckmesssystem oder einem Differenzdruckmesssystem, erfasst, ob, und falls ja, wie schnell der zuvor in dem zu prüfenden Leitungsbereich 7.1 aufgebaute Überdruck abfällt. Hierbei ist vorgesehen, dass auf eine Undichtigkeit in dem zu prüfenden Leitungsbereich 7.1 rückgeschlossen wird, wenn der innerhalb einer vorab festgelegten oder festlegbaren Zeitperiode erfasste Druckabfall einen kritischen Schwellwert unterschreitet.

Die Koordination der ansteuerbaren Komponenten der Sauerstoffreduzierungsanlage 1 im Prüf-Modus, und insbesondere die Koordination des Kompressorsystems 2 und/oder des Gasseparationssystems 3 sowie die Koordination der entsprechenden in dem Leitungssystem 7 angeordneten Ventile 5.1 bis 5.7, erfolgt bei der in Fig. 1 dargestellten exemplarischen Ausführungsform über eine Steuereinrichtung 100. In dieser Steuereinrichtung 100 findet auch die Auswertung des mit Hilfe des Druckmesssystems 8.1 bis 8.4 im Prüf-Modus der Sauerstoffreduzierungsanlage 1 aufgenommenen zeitlichen Durckverlaufes statt.

In der Steuereinrichtung 100 ist für jeden im Hinblick auf die Dichtigkeit überprüfbaren Bereich 7.1 bis 7.4 des Leitungssystems 7 vorzugsweise mindestens ein entsprechend zugeordneter Schwellwert abgelegt. Dieser Schwellwert kann bei Inbetriebnahme der Sauerstoffreduzierungsanlage 1 aufgenommen bzw. festgelegt werden, selbstverständlich ist aber auch denkbar, den Schwellwert analytisch zu bestimmen.

Die erfindungsgemäße Lösung ist nicht darauf beschränkt, dass im Prüf-Modus der Sauerstoffreduzierungsanlage 1 das am Ausgang 3b des Gasseparationssystems 3 bereitgestellte und mit Stickstoff angereicherte Gasgemisch zum Abdrücken des zu prüfenden Leitungsbereichs 7.1 bis 7.4 herangezogen wird. Vielmehr ist es von Vorteil, wenn im Prüf-Modus direkt das am Ausgang 2b des Kompressorsystems 2 bereitgestellte, komprimierte Anfangsgasgemisch zum Abdrücken des zu prüfenden Leitungsbereichs 7.1 bis 7.4 genutzt wird. Dann kann im Prüf-Modus das Gasseparationssystem 3 abgeschaltet oder in einem entsprechenden Stand-By-Modus betrieben werden, was beispielsweise eine Wartung des Gasseparationssystems 3 während des Prüf-Modus der Sauerstoffreduzierungsanlage 1 ermöglicht.

Darüber hinaus können Ressourcen (Energie) eingespart werden, wenn im Prüf-Modus der Sauerstoffreduzierungsanlage 1 das am Ausgang 2b des Kompressorsystems 2 bereitgestellte (komprimierte) Anfangs-Gasgemisch direkt zum Zwecke der Dichtigkeitsprüfung verwendet wird.

Zu diesem Grund weist die in Fig. 1 schematisch dargestellte Sauerstoffreduzierungsanlage 1 eine Bypassleitung 6 auf, die mit Hilfe der Ventile 5.6 und 5.7 im Prüf-Modus der Sauerstoffreduzierungsanlage 1 den Ausgang 2b des Kompressorsystems 2 direkt mit dem Ausgang des Gasseparationssystems 3 strömungsmäßig verbindet.

Die Prüfung der anderen Leitungsbereiche 7.2, 7.3, 7.4, insbesondere des dem zweiten umschlossenen Bereich 20.2 zugeordneten Leitungsabschnittes 7.2, erfolgt in analoger Weise wie zuvor im Zusammenhang mit dem Bereich 7.1 beschrieben.

Um zu erreichen, dass eine Undichtigkeit in einem Leitungsbereich 7.1 bis 7.4, beispielsweise in dem dem ersten umschlossenen Bereich 20.1 zugeordneten Leitungsabschnitt 7.1, nicht nur identifiziert, sondern auch lokalisiert werden kann, ist es von Vorteil, wenn der entsprechende Leitungsabschnitt 7.1 bis 7.4 in eine Vielzahl von unmittelbar aneinander angrenzende und über Ventile voneinander trennbare Bereiche unterteilt ist, so dass diese Bereiche sukzessiv im Hinblick auf ihre Dichtigkeit geprüft werden können.

Die Durchführung einer Dichtigkeitsprüfung erfolgt vorzugsweise zu vorgebbaren Zeiten und/oder Ereignissen vorzugsweise automatisch und noch bevorzugter wahlweise automatisch, um stets sicherstellen zu können, dass die anlagentechnischen Standards eingehaltenen werden.

Wie in Fig. 1 schematisch dargestellt, ist es bei der erfindungsgemäßen Sauerstoffreduzierungsanlage 1 von Vorteil, wenn in dem mindestens einen der Sauerstoffreduzierungsanlage 1 zugeordneten umschlossenen Bereich 20.1, 20.2 kontinuierlich oder zu vorgegebenen oder vorgebbaren Zeiten bzw. Ereignissen der in der Raumatmosphäre des entsprechenden umschlossenen Bereiches herrschende Sauerstoffgehalt mit Hilfe eines Messsystems 9 erfasst wird, wobei in Abhängigkeit von dem erfassten Sauerstoffgehalt mit Hilfe der Sauerstoffreduzierungsanlage 1 ggf. weiteres mit Stickstoff angereichtes Gas in den Bereich 20.1, 20.2 eingeleitet wird, um ein vorgegebenes Inertisierungsniveau in dem umschlossenen Bereich 20.1, 20.2 zu halten.

Fig. 2 ist eine schematische Ansicht einer weiteren exemplarischen Ausführungsform der erfindungsgemäßen Sauerstoffreduzierungsanlage 1, welche im Wesentlichen wie die in Fig. 1 gezeigte Sauerstoffreduzierungsanlage 1 aufgebaut ist. Im Unterschied zu der in Fig. 1 gezeigten Ausführungsform ist die in Fig. 2 schematisch dargestellte Sauerstoffreduzierungsanlage 1 jedoch nicht als Mehrbereichsanlage ausgeführt. Vielmehr ist die in Fig. 2 gezeigte Sauerstoffreduzierungsanlage 1 nur einem einzigen umschlossenen Bereich 20.1 zugeordnet und dient dazu, in diesem (einzigen) umschlossenen Bereich 20.1 ein vorab festgelegtes oder festlegbares Absenkungs- bzw. Inertisierungsniveau einzustellen und zu halten.

Die exemplarische Ausführungsform der Sauerstoffreduzierungsanlage 1 gemäß Fig. 2 unterscheidet sich von der zuvor unter Bezugnahme auf die Darstellung in Fig. 1 beschriebenen Ausführungsform jedoch dadurch, dass bei der Sauerstoffreduzierungsanlage 1 gemäß Fig. 2 eine Mischkammer 4 vorgesehen ist. Im Einzelnen ist bei der in Fig. 2 schematisch dargestellten Ausführungsform der Eingang 2a des Kompressorsystems 2 mit einem Ausgang 4c einer Mischkammer 4 strömungsmäßig verbunden bzw. verbindbar. Die Mischkammer 4 weist zwei Eingänge 4a, 4b auf. Ein erster Eingang 4a der Mischkammer 4 ist über einen Kompressor bzw. Ventilator 2.1 strömungsmäßig mit der Raumatmosphäre des (in Fig. 2 einzigen) umschlossenen Bereiches 20.1 verbunden oder verbindbar. Über den Eingang 4a und den Kompressor bzw. Ventilator 2.1 kann dann der Mischkammer 4 in geregelter Weise Raumluft aus dem ersten umschlossenen Bereich 20.1 und/oder dem zweiten umschlossenen Bereich 20.2 zugeführt werden.

Wie in Fig. 2 gezeigt, dient der weitere Eingang 4b der Mischkammer 4 dazu, der Mischkammer 4 bedarfsweise Frischluft zuzuführen. Zu diesem Zweck ist der Mischkammer 4 ein Kompressor- bzw. Ventilatorsystem 2.2 zugeordnet, um Frischluft (Außenluft) anzusaugen und über den Eingang 4b der Mischkammer 4 zuzuführen.

In der Mischkammer 4 wird das Anfangsgasgemisch, welches dem Kompressorsystem 2 zuzuführen ist, bereitgestellt. Das Anfangsgasgemisch kann - wie bei der Ausführungsform gemäß Fig. 1 - entweder reine Frischluft sein, oder aber auch ein Gemisch aus Frischluft und einem Anteil der dem ersten und/oder zweiten umschlossenen Bereich 20.1, 20.2 entnommenen Raumluft.

Im Übrigen entspricht die in Fig. 2 schematisch dargestellte exemplarische Ausführungsform der Sauerstoffreduzierungsanlage der zuvor unter Bezugnahme auf die Darstellung in Fig. 1 beschriebenen Anlage. Um Wiederholungen zu vermeiden wird von daher auf die zuvor offenbarten Aspekte verwiesen.

Hierbei ist jedoch darauf hinzuweisen, dass bei der in Fig. 2 schematisch dargestellten ausführungsform der erfindungsgemäßen Sauerstoffreduzierungsanlage 1 die die Mischkammer 4 nicht wesentlich für die vorliegende Erfindung ist. Wie zuvor unter Verweis auf die in Fig. 1 dargestellte Ausführungsform ausgeführt, ist es selbstverständlich auch möglich, bei der Einbereichsanlage gemäß Fig. 2 auf die Mischkammer 4 zu verzichten. Beispielsweise könnte - wie es im Zusammenhang mit der in Fig. 1 schematisch dargestellten Sauerstoffreduzierungsanlage 1 offenbart ist - über den Eingang 2a des Kompressorsystems 2 direkt Frischluft von außen angesaugt werden. In diesem Fall würde es sich dann bei dem im Kompressorsystem 2 komprimierten Anfangsgasgemisch um reine Frischluft handeln.

Die Erfindung ist nicht auf die in den Zeichnungen dargestellten exemplarischen Ausführungsformen beschränkt, sondern ergibt sich aus einer Zusammenschau sämtlicher hierin offenbarter Merkmale.

In diesem Zusammenhang ist ferner anzumerken, dass - obwohl in den Zeichnungen nicht dargestellt - es selbstverständlich von Vorteil ist, wenn der bzw. die der Sauerstoffreduzierungsanlage 1 zugeordnete/zugeordneten Bereich/Bereiche 20.1, 20.2 mit einem gebäudeseitigen Druckentlastungssystem versehen sind, um beim Zuführen von dem von der Inertgasquelle (Kompressorsystem 2, Gasseparationssystem 3) bereitgestellten Gas bzw. Gasgemisch vorzugsweise automatisch eine Druckentlastung in dem betreffenden Bereich 20.1, 20.2 zu erreichen. Ein solches Druckentlastungssystem könnte beispielsweise eine oder mehrere Druckentlastungsklappen aufweisen, die vorzugsweise entsprechend dimensioniert und ausgelegt sind, dass sich bei einem Fluten des umschlossenen Bereiches 20.1, 20.2 mit Inertgas zeitnah eine entsprechende Druckentlastung in dem entsprechenden Bereich 20.1, 20.2 einstellt.

## Patentansprüche

1. Verfahren zum Betreiben einer Sauerstoffreduzierungsanlage (1), welche eine Inertgasquelle (2, 3) zum Bereitstellen eines sauerstoffreduzierten Gasgemisches bzw. Inertgases und ein Leitungssystem (7; 7.1, 7.2, 7.3, 7.4) aufweist, welches mit der Inertgasquelle (2, 3) und mit mindestens einem umschlossenen Bereich (20.1, 20.2) strömungsmäßig verbunden oder verbindbar ist zum bedarfsweisen Zuführen von mindestens einem Teil des von der Inertgasquelle (2, 3) bereitgestellten Gasgemisches bzw. Gases zu dem mindestens einen umschlossenen Bereich (20.1, 20.2), wobei das Verfahren den folgenden Verfahrensschritt aufweist:
- Zuführen von mindestens einem Teil des von der Inertgasquelle (2, 3) bereitgestellten Gasgemisches bzw. Gases über das Leitungssystem (7; 7.1, 7.2, 7.3, 7.4) zu dem mindestens einen umschlossenen Bereich (20.1, 20.2) derart, dass der Sauerstoffgehalt in der Atmosphäre des umschlossenen Bereiches (20.1, 20.2) einen vorab festgelegten oder festlegbaren und im Vergleich zum Sauerstoffgehalt der normalen Umgebungsluft reduzierten Wert annimmt,
**dadurch gekennzeichnet, dass**
das Verfahren ferner den Verfahrensschritt des Durchführens einer Dichtigkeitsprüfung von mindestens einem Bereich des Leitungssystems (7.1, 7.2, 7.3, 7.4) durch Abdrücken des im Hinblick auf die Dichtigkeit zu prüfenden Leitungsbereiches mit mindestens einem Teil des von der Inertgasquelle (2, 3) bereitgestellten Gasgemisches bzw. Gases aufweist,
wobei die Inertgasquelle (2, 3) ein Kompressorsystem (2, 2.1, 2.2) und ein dem Kompressorsystem (2, 2.1, 2.2) strömungsmäßig nachgeschaltetes Gasseparationssystem (3) aufweist, wobei in einen Eingang (3a) des Gasseparationssystems (3) zumindest zeitweilig ein mit dem Kompressorsystem (2, 2.1, 2.2) komprimiertes Anfangsgasgemisch eingeleitet wird und wobei in dem Gasseparationssystem (3) zumindest teilweise eine Auftrennung des komprimierten Anfangsgasgemisches in unterschiedliche Gasbestandteile erfolgt derart, dass an einem Ausgang (3b) des Gasseparationssystems (3) ein sauerstoffreduziertes und mit Stickstoff angereichertes Gasgemisch vorliegt, wobei zur Durchführung der Dichtigkeitsprüfung wahlweise das von dem Kompressorsystem (2, 2.1, 2.2) bereitgestellte, komprimierte Anfangsgasgemisch oder das an dem Ausgang (3b) des Gasseparationssystems (3) bereitgestellte und mit Stickstoff angereicherte Gasgemisch in den zu prüfenden Bereich des Leitungssystems (7.1, 7.2, 7.3, 7.4) eingeleitet wird.

2. Verfahren nach Anspruch 1,
wobei zur Durchführung der Dichtigkeitsprüfung des Leitungsbereiches folgende Verfahrensschritte durchgeführt werden:
i) Absperren eines Durchflusses des von der Inertgasquelle (2, 3) bereitgestellten Gasgemisches bzw. Gases durch das Leitungssystem (7; 7.1, 7.2, 7.3, 7.4) derart, dass der im Hinblick auf die Dichtigkeit zu prüfende Bereich des Leitungssystems (7.1, 7.2, 7.3, 7.4) nach wie vor mit der Inertgasquelle (2, 3), aber nicht mehr mit dem mindestens einen umschlossenen Bereich (20.1, 20.2) strömungsmäßig verbunden ist;
ii) Füllen des zu prüfenden Leitungsbereiches mit zumindest einem Teil des von der Inertgasquelle (2, 3) bereitgestellten Gasgemisches bzw. Gases derart, dass ein Überdruck in dem im Hinblick auf die Dichtigkeit zu prüfenden Leitungsbereich aufgebaut wird; und
iii) Erfassen, ob der in dem zu prüfenden Leitungsbereich aufgebaute Überdruck innerhalb einer vorab festgelegten oder festlegbaren Zeitperiode unter einen kritischen Schwellwert fällt.

3. Verfahren nach Anspruch 2,
wobei im Verfahrensschritt i) der Durchfluss durch das Leitungssystem (7; 7.1, 7.2, 7.3, 7.4) abgesperrt wird, indem mindestens ein Ventil (5.1, 5.2, 5.3, 5.4, 5.5, 5.6), insbesondere ein Bereichsventil in dem Leitungssystem (7; 7.1, 7.2, 7.3, 7.4) geschlossen wird.

4. Verfahren nach Anspruch 2 oder 3,
wobei der Verfahrensschritt iii) initiiert wird, nachdem sich das in dem zu prüfenden Bereich des Leitungssystems (7.1, 7.2, 7.3, 7.4) eingebrachte Gasgemisch bzw. Gas strömungsmäßig beruhigt hat.

5. Verfahren nach einem der Ansprüche 2 bis 4,
wobei im Verfahrensschritt iii) ein zeitlicher Druckverlauf gemessen und der Druckabfall erfasst wird, indem der zeitliche Druckverlauf analysiert wird.

6. Verfahren nach Anspruch 5,
wobei der zeitliche Druckverlauf mit einem Absolutdruck- oder einem Differenzdruck-Messsystem (8.1, 8.2, 8.3, 8.4) erfasst wird.

7. Verfahren nach einem der Ansprüche 2 bis 6,
wobei ferner folgender Verfahrensschritt nach dem Verfahrensschritt iii) vorgesehen ist:
iv) Ausgabe einer Störungsmeldung, wenn im Verfahrensschritt iii) der in dem zu prüfenden Bereich des Leitungssystems (7.1, 7.2, 7.3, 7.4) aufgebaute Druck innerhalb der Zeitperiode unter den kritischen Schwellwert fällt.

8. Verfahren nach einem der Ansprüche 1 bis 7,
wobei nacheinander mehrere unmittelbar aneinander angrenzende und über Ventile (5.1, 5.2, 5.3, 5.4, 5.5, 5.6) voneinander trennbare Bereiche des Leitungssystems (7.1, 7.2, 7.3, 7.4) im Hinblick auf Ihre Dichtigkeit geprüft werden.

9. Verfahren nach einem der Ansprüche 1 bis 8,
wobei der Verfahrensschritt des Durchführens einer Dichtigkeitsprüfung zu vorgebbaren Zeiten und/oder Ereignissen vorzugsweise automatisch und noch bevorzugter wahlweise automatisch durchgeführt wird.

10. Verfahren nach einem der Ansprüche 1 bis 9,
wobei der Verfahrensschritt des Durchführens einer Dichtigkeitsprüfung zu einem Zeitpunkt durchgeführt wird, wenn durch geregeltes Zuführen von mindestens einem Teil des von der Inertgasquelle (2, 3) bereitgestellten Gasgemisches bzw. Gases der Sauerstoffgehalt in der Atmosphäre des mindestens einen umschlossenen Bereiches (20.1, 20.2) auf den vorab festgelegten oder festlegbaren Wert reduziert worden ist, und wobei während der Durchführung der Dichtigkeitsprüfung kein von der Inertgasquelle (2, 3) bereitgestelltes Gasgemisch bzw. Gas über das Leitungssystem (7; 7.1, 7.2, 7.3, 7.4) dem mindestens einen umschlossenen Bereich (20.1, 20.2) zugeführt wird.

11. Verfahren nach einem Ansprüche 1 bis 10,
wobei das Verfahren ferner folgenden Verfahrensschritt aufweist:
- Erfassen des Sauerstoffgehalts in der Atmosphäre des mindestens einen umschlossenen Bereiches (20.1, 20.2),
wobei der Sauerstoffgehalt vorzugsweise kontinuierlich oder zu vorgegebenen oder vorgebaren Zeiten und/oder Ereignissen erfasst wird.

12. Verfahren nach Anspruch 11,
wobei der Verfahrensschritt des Zuführens von mindestens einem Teil des von der Inertgasquelle (2, 3) bereitgestellten Gasgemisches bzw. Gases zu dem mindestens einen umschlossenen Bereich (20.1, 20.2) in Abhängigkeit von dem in der Atmosphäre des mindestens einen umschlossenen Bereiches (20.1, 20.2) erfassten Sauerstoffgehaltes derart erfolgt, dass der Sauerstoffgehalt in der Atmosphäre des mindestens einen umschlossenen Bereich (20.1, 20.2)s - ggf. mit einem Regelbereich - auf dem vorab festgelegten oder festlegbaren Wert gehalten wird.

13. Sauerstoffreduzierungsanlage (1) zum geregelten Reduzieren des Sauerstoffgehaltes in der Atmosphäre eines umschlossenen Bereiches (20.1, 20.2), wobei die Sauerstoffreduzierungsanlage (1) folgendes aufweist:
- eine Inertgasquelle (2, 3) zum Bereitstellen eines sauerstoffreduzierten Gasgemisches bzw. eines Inertgases;
- wobei die Inertgasquelle (2, 3) ein Kompressorsystem (2, 2.1, 2.2) und ein dem Kompressorsystem (2, 2.1, 2.2) strömungsmäßig nachgeschaltetes Gasseparationssystem (3) aufweist, wobei in einen Eingang (3a) des Gasseparationssystems (3) zumindest zeitweilig ein mit dem Kompressorsystem (2, 2.1, 2.2) komprimiertes Anfangsgasgemisch eingeleitet wird und wobei in dem Gasseparationssystem (3) zumindest teilweise eine Auftrennung des komprimierten Anfangsgasgemisches in unterschiedliche Gasbestandteile erfolgt derart, dass an einem Ausgang (3b) des Gasseparationssystems (3) ein sauerstoffreduziertes und mit Stickstoff angereichertes Gasgemisch vorliegt;
- ein Leitungssystem (7; 7.1, 7.2, 7.3, 7.4), welches mit der Inertgasquelle (2, 3) und mit dem umschlossenen Bereich (20.1, 20.2) strömungsmäßig verbunden oder verbindbar ist, um bedarfsweise mindestens einen Teil des von der Inertgasquelle (2, 3) bereitgestellten Gasgemisches bzw. Gases dem umschlossenen Bereich (20.1, 20.2) zuzuführen;
- mindestens eine Einrichtung zum Absperren eines Durchflusses des von der Inertgasquelle (2, 3) bereitgestellten Gasgemisches bzw. Gases durch das Leitungssystem (7; 7.1, 7.2, 7.3, 7.4); und
- eine Steuereinrichtung (100), welche ausgelegt ist, die Inertgasquelle (2, 3) und die mindestens eine Absperreinrichtung derart anzusteuern, dass ein Verfahren nach einem der Ansprüche 1 bis 12 durchgeführt wird.

14. Sauerstoffreduzierungsanlage (1) nach Anspruch 13,
wobei die mindestens eine Einrichtung zum Absperren eines Durchflusses des von der Inertgasquelle (2, 3) bereitgestellten Gasgemisches bzw. Gases durch das Leitungssystem (7; 7.1, 7.2, 7.3, 7.4) ein von der Steuereinrichtung ansteuerbares Ventil (5.1, 5.2, 5.3, 5.4, 5.5, 5.6), insbesondere Bereichsventil, umfasst.

## Claims

1. A method for operating an oxygen reduction system (1) comprising an inert gas source (2, 3) for providing an oxygen-reduced gas mixture, or inert gas respectively, and a line system (7; 7.1, 7.2, 7.3, 7.4) which is fluidly connected or connectable to the inert gas source (2, 3) and to at least one enclosed area (20.1, 20.2) in order to supply at least a portion of the gas mixture or gas provided by the inert gas source (2, 3) to the at least one enclosed area (20.1, 20.2) as needed, wherein the method comprises the following method step:
- supplying at least a portion of the gas mixture or gas provided by the inert gas source (2, 3) to the at least one enclosed area (20.1, 20.2) through the line system (7; 7.1, 7.2, 7.3, 7.4) such that the oxygen content in the atmosphere of the enclosed area (20.1, 20.2) assumes a predefined or definable value which is reduced compared to the oxygen content of the normal ambient air,
**characterized in that**
the method further comprises the method step of conducting a leak test on at least one section of the line system (7.1, 7.2, 7.3, 7.4) by pressure-testing the line section to be checked for tightness using at least a portion of the gas mixture or gas provided by the inert gas source (2, 3),
wherein the inert gas source (2, 3) comprises a compressor system (2, 2.1, 2.2) and a gas separation system (3) situated downstream of the compressor system (2, 2.1, 2.2) in terms of the flow, wherein an initial gas mixture compressed by the compressor system (2, 2.1, 2.2) is at least intermittently introduced into an inlet (3a) of the gas separation system (3) and wherein the compressed initial gas mixture is at least partly separated into different gas components in the gas separation system (3) such that an oxygen-reduced and nitrogen-enriched gas mixture is provided at an outlet (3b) of the gas separation system (3), wherein to conduct the leak test, either the compressed initial gas mixture provided by the compressor system (2, 2.1, 2.2) or the nitrogen-enriched gas mixture provided at the outlet (3b) of the gas separation system (3) is introduced into the section of the line system (7.1, 7.2, 7.3, 7.4) to be checked.

2. The method according to claim 1,
wherein the following method step is performed in the conducting of the leak test on the line section:
i) blocking a flow of the gas mixture or gas provided by the inert gas source (2, 3) through the line system (7; 7.1, 7.2, 7.3, 7.4) such that the section of the line system (7.1, 7.2, 7.3, 7.4) to be tested for tightness remains fluidly connected to the inert gas source (2, 3) but not to the at least one enclosed area (20.1, 20.2);
ii) filling the line section under testing with at least a portion of the gas mixture or gas provided by the inert gas source (2, 3) such that excess pressure builds up in the line section to be tested for tightness; and
iii) determining whether the excess pressure which developed in the line section under testing drops below a critical threshold value within a predefined or definable time period.

3. The method according to claim 2,
wherein the flow through the line system (7; 7.1, 7.2, 7.3, 7.4) is blocked in method step i) by means of closing at least one valve (5.1, 5.2, 5.3, 5.4, 5.5, 5.6), particularly a zone valve in the line system (7; 7.1, 7.2, 7.3, 7.4).

4. The method according to claim 2 or 3,
wherein method step iii) is initiated after the gas mixture or gas introduced into the section of the line system (7.1, 7.2, 7.3, 7.4) to be tested has settled.

5. The method according to one of claims 2 to 4,
wherein a chronological pressure curve is quantified in method step iii) and the decrease in pressure determined by analyzing the chronological pressure curve.

6. The method according to claim 5,
wherein the chronological pressure curve is determined by an absolute pressure or differential pressure measuring system (8.1, 8.2, 8.3, 8.4).

7. The method according to any one of claims 2 to 6,
wherein the following further method step is provided subsequent to method step iii):
iv) emitting a malfunction notification when the pressure which built up in the section of the line system (7.1, 7.2, 7.3, 7.4) under testing drops below the critical threshold value within the given time period in method step iii).

8. The method according to any one of claims 1 to 7,
wherein a plurality of directly adjacent sections of the line system (7.1, 7.2, 7.3, 7.4) separable by valves (5.1, 5.2, 5.3, 5.4, 5.5, 5.6) are successively tested for tightness.

9. The method according to any one of claims 1 to 8,
wherein the method step of conducting a leak test is preferably performed automatically at predefinable times and/or upon predefinable events, and even more preferentially selectively automatically.

10. The method according to any one of claims 1 to 9,
wherein the method step of conducting a leak test is performed when the oxygen content in the atmosphere of the at least one enclosed area (20.1, 20.2) has been reduced to the predefined or definable value by the regulated feed of at least a portion of the gas mixture or gas provided by the inert gas source (2, 3), and wherein none of the gas mixture or gas provided by the inert gas source (2, 3) is fed to the at least one enclosed area (20.1, 20.2) through the line system (7; 7.1, 7.2, 7.3, 7.4) while the leak test is being conducted.

11. The method according to any one of claims 1 to 10,
wherein the method further comprises the following method step:
- determining the oxygen content in the atmosphere of the at least one enclosed area (20.1, 20.2),
wherein the oxygen content is preferably determined continuously or at predefined or predefinable times/events.

12. The method according to claim 11,
wherein the method step of supplying at least a portion of the gas mixture or gas provided by the inert gas source (2, 3) to the at least one enclosed area (20.1, 20.2) occurs as a function of the oxygen content detected in the atmosphere of the at least one enclosed area (20.1, 20.2) such that the oxygen content in the atmosphere of the at least one enclosed area (20.1, 20.2) can be maintained - with a control range as applicable - at the predefined or predefinable value.

13. An oxygen reduction system (1) for the regulated reducing of the oxygen content in the atmosphere of an enclosed area (20.1, 20.2), wherein the oxygen reduction system (1) comprises the following:
- an inert gas source (2, 3) for providing an oxygen-reduced gas mixture or inert gas respectively;
- wherein the inert gas source (2, 3) comprises a compressor system (2, 2.1, 2.2) and a gas separation system (3) situated downstream of the compressor system (2, 2.1, 2.2) in terms of the flow, wherein an initial gas mixture compressed by the compressor system (2, 2.1, 2.2) is at least intermittently introduced into an inlet (3a) of the gas separation system (3) and wherein the compressed initial gas mixture is at least partly separated into different gas components in the gas separation system (3) such that an oxygen-reduced and nitrogen-enriched gas mixture is provided at an outlet (3b) of the gas separation system (3);
- a line system (7; 7.1, 7.2, 7.3, 7.4) which is fluidly connected or connectable to the inert gas source (2, 3) and to the enclosed area (20.1, 20.2) in order to supply at least a portion of the gas mixture or gas provided by the inert gas source (2, 3) to the enclosed area (20.1, 20.2) as needed;
- at least one device for blocking a flow of the gas mixture or gas provided by the inert gas source (2, 3) through the line system (7; 7.1, 7.2, 7.3, 7.4); and
- a control device (100) designed to control the inert gas source (2, 3) and the at least one blocking device so as to realize a method in accordance with any one of claims 1 to 12.

14. The oxygen reduction system (1) according to claim 13,
wherein the at least one device for blocking a flow of the gas mixture or gas provided by the inert gas source (2, 3) through the line system (7; 7.1, 7.2, 7.3, 7.4) comprises a valve (5.1, 5.2, 5.3, 5.4, 5.5, 5.6), particularly a zone valve, able to be controlled by the control device.

## Revendications

1. Procédé pour faire fonctionner une installation de réduction d'oxygène (1) qui comprend une source de gaz inerte (2, 3) pour mettre à disposition un mélange gazeux ou un gaz inerte réduit en oxygène, et un système de conduite (7 ; 7.1, 7.2, 7.3, 7.4) qui est relié ou susceptible d'être relié sur le plan fluidique à la source de gaz inerte (2, 3) et à au moins une zone enfermée (20.1, 20.2) pour amener en cas de besoin au moins une partie du mélange gazeux ou du gaz mis à disposition par la source de gaz inerte (2, 3) jusqu'à ladite au moins une zone enfermée (20.1, 20.2), le procédé comprenant l'étape suivante consistant à :
- amener une partie au moins du mélange gazeux ou du gaz mis à disposition par la source de gaz inerte (2, 3) via le système de conduite (7 ; 7.1, 7.2, 7.3, 7.4) jusqu'à ladite au moins une zone enfermée (20.1, 20.2), de telle sorte que la teneur en oxygène dans l'atmosphère de la zone enfermée (20.1, 20.2) prend une valeur fixée ou susceptible d'être fixée préalablement et réduite par comparaison à la teneur en oxygène de l'air ambiant normal,
**caractérisé en ce que**
le procédé comprend en outre l'étape consistant à effectuer un contrôle d'étanchéité d'au moins une zone du système de conduite (7.1, 7.2, 7.3, 7.4) par mise sous pression de la zone de conduite à contrôler vis-à-vis de l'étanchéité par une partie au moins du mélange gazeux ou du gaz mis à disposition par la source de gaz inerte (2, 3),
dans lequel
la source de gaz inerte (2, 3) comprend un système formant compresseur (2, 2.1, 2.2) et un système de séparation de gaz (3) agencé en aval du système formant compresseur (2, 2.1, 2.2) sur le plan fluidique, et on introduit dans une entrée (3a) du système de séparation de gaz (3) au moins temporairement un mélange gazeux initial comprimé par le système formant compresseur (2, 2.1, 2.2), et une séparation du mélange gazeux initial comprimé en différentes composantes de gaz s'effectue au moins partiellement dans le système de séparation de gaz (3), de telle sorte que dans une sortie (3b) du système de séparation de gaz (3), il se présente un mélange gazeux réduit en oxygène et enrichi d'azote, et pour effectuer le contrôle d'étanchéité, on introduit au choix le mélange gazeux initial comprimé mis à disposition par le système formant compresseur (2, 2.1, 2.2) ou bien le mélange gazeux enrichi d'azote et mis à disposition à la sortie (3b) du système de séparation de gaz (3), dans la zone à contrôler du système de conduite (7.1, 7.2, 7.3, 7.4).

2. Procédé selon la revendication 1,
dans lequel
pour effectuer le contrôle d'étanchéité de la zone de conduite, on met en oeuvre les étapes suivantes consistant à :
i) couper un écoulement du mélange gazeux ou du gaz, mis à disposition par la source de gaz inerte (2, 3), à travers le système de conduite (7 ; 7.1, 7.2, 7.3, 7.4) de telle sorte que la zone du système de conduite (7.1, 7.2, 7.3, 7.4) à contrôler vis-à-vis de l'étanchéité est toujours reliée par voie fluidique à la source de gaz inerte (2, 3), mais non plus à ladite au moins une zone enfermée (20.1, 20.2) ;
ii) remplir la zone de la conduite à contrôler avec une partie au moins du mélange gazeux ou du gaz mis à disposition par la source de gaz inerte (2, 3), de telle sorte qu'il s'établit une surpression dans la zone de conduite à contrôler vis-à-vis de l'étanchéité ; et
iii) détecter si la surpression établie dans la zone de la conduite à contrôler tombe au-dessous d'une valeur seuil critique à l'intérieur d'une période temporelle fixée ou susceptible d'être fixée préalablement.

3. Procédé selon la revendication 2,
dans lequel, dans l'étape i), on coupe l'écoulement à travers le système de conduite (7 ; 7.1, 7.2, 7.3, 7.4) en fermant au moins une vanne (5.1, 5.2, 5.3, 5.4, 5.5, 5.6), en particulier une vanne de la zone dans le système de conduite (7 ; 7.1, 7.2, 7.3, 7.4).

4. Procédé selon la revendication 2 ou 3,
dans lequel on initialise l'étape iii) une fois que le mélange gazeux ou le gaz introduit dans la zone du système de conduite (7.1, 7.2, 7.3, 7.4) à contrôler s'est calmé sur le plan fluidique.

5. Procédé selon l'une des revendications 2 à 4,
dans lequel, dans l'étape iii), on mesure une évolution temporelle de la pression et on détecte une chute de pression en analysant l'évolution temporelle de la pression.

6. Procédé selon la revendication 5,
dans lequel on détecte l'évolution temporelle de la pression par un système de mesure de pression absolue ou de pression différentielle (8.1, 8.2, 8.3, 8.4).

7. Procédé selon l'une des revendications 2 à 6,
dans lequel on prévoit en outre l'étape suivante après l'étape iii):
iv) on émet un message de perturbation lorsque dans l'étape iii) la pression établie dans la zone du système de conduite (7.1, 7.2, 7.3, 7.4) à contrôler tombe au-dessous de la valeur seuil critique à l'intérieur de la période temporelle.

8. Procédé selon l'une des revendications 1 à 7,
dans lequel on contrôle successivement plusieurs zones du système de conduite (7.1, 7.2, 7.3, 7.4) vis-à-vis de leur étanchéité, qui sont directement adjacentes les unes aux autres et séparées les unes des autres par des vannes (5.1, 5.2, 5.3, 5.4, 5.5, 5.6).

9. Procédé selon l'une des revendications 1 à 8,
dans lequel on met en oeuvre l'étape de la mise en oeuvre d'un contrôle d'étanchéité à des instants et/ou à des événements prédéterminés, de préférence automatiquement et de manière encore plus préférée au choix automatiquement.

10. Procédé selon l'une des revendications 1 à 9,
dans lequel on met en oeuvre l'étape de la mise en oeuvre d'un contrôle d'étanchéité à un instant lorsque, par alimentation régulée d'une partie au moins du mélange gazeux ou du gaz mis à disposition par la source de gaz inerte (2, 3), la teneur en oxygène dans l'atmosphère de ladite au moins une zone enfermée (20.1, 20.2) a été réduite à la valeur fixée ou susceptible d'être fixée préalablement, et dans lequel, pendant la mise en oeuvre du contrôle d'étanchéité, aucun mélange gazeux ou gaz mis à disposition par la source de gaz inerte n'est amené à ladite au moins une zone enfermée (20.1, 20.2) par le système de conduite (7; 7.1, 7.2, 7.3, 7.4).

11. Procédé selon l'une des revendications 1 à 10,
dans lequel le procédé comprend en outre l'étape suivante consistant à :
- détecter la teneur en oxygène dans l'atmosphère de ladite au moins une zone enfermée (20.1, 20.2),
et on détecte la teneur en oxygène de préférence en continu ou à des instants et/ou à des événements donnés ou susceptibles d'être donnés.

12. Procédé selon la revendication 11,
dans lequel l'étape de l'amenée d'une partie au moins du mélange gazeux ou du gaz mis à disposition par la source de gaz inerte (2, 3) jusqu'à ladite au moins une zone enfermée (20.1, 20.2) s'effectue en fonction de la teneur en oxygène détectée dans l'atmosphère de ladite au moins une zone enfermée (20.1, 20.2), de telle sorte que la teneur en oxygène dans l'atmosphère de ladite au moins une zone enfermée (20.1, 20.2) est maintenue à la valeur fixée ou susceptible d'être fixée préalablement le cas échéant avec une plage de régulation.

13. Installation de réduction d'oxygène (1) pour la réduction régulée de la teneur en oxygène dans l'atmosphère d'une zone enfermée (20.1, 20.2), l'installation de réduction d'oxygène (1) comprenant ce qui suit :
- une source de gaz inerte (2, 3) pour mettre à disposition un mélange gazeux ou un gaz inerte réduit en oxygène,
- dans laquelle la source de gaz inerte (2, 3) comprend un système formant compresseur (2, 2.1, 2.2) et un système de séparation de gaz (3) agencé en aval du système formant compresseur (2, 2.1, 2.2) sur le plan fluidique, et un mélange gazeux initial comprimé par le système formant compresseur (2, 2.1, 2.2) est introduit dans une entrée (3a) du système de séparation de gaz (3) au moins temporairement, et une séparation du mélange gazeux initial comprimé en différentes composantes de gaz s'effectue au moins partiellement dans le système de séparation de gaz (3), de telle sorte que dans une sortie (3b) du système de séparation de gaz (3), il se présente un mélange gazeux réduit en oxygène et enrichi d'azote,
- un système de conduite (7 ; 7.1, 7.2, 7.3, 7.4) qui est relié ou susceptible d'être relié sur le plan fluidique à la source de gaz inerte (2, 3) et à la zone enfermée (20.1, 20.2) pour amener en cas de besoin au moins une partie du mélange gazeux ou du gaz mis à disposition par la source de gaz inerte (2, 3) jusqu'à la zone enfermée (20.1, 20.2) ;
- au moins un moyen pour couper un écoulement du mélange gazeux ou du gaz, mis à disposition par la source de gaz inerte (2, 3), à travers le système de conduite (7 ; 7.1, 7.2, 7.3, 7.4) ; et
- un moyen de commande (100) conçu pour piloter la source de gaz inerte (2, 3) et ledit au moins un moyen de coupure de manière à mettre en oeuvre un procédé selon l'une des revendications 1 à 12.

14. Installation de réduction d'oxygène (1) selon la revendication 13,
dans laquelle ledit au moins un moyen pour couper un écoulement du mélange gazeux ou du gaz, mis à disposition par la source de gaz inerte (2, 3), à travers le système de conduite (7 ; 7.1, 7.2, 7.3, 7.4), comprend une vanne (5.1, 5.2, 5.3, 5.4, 5.5, 5.6) pilotable par le moyen de commande, en particulier une vanne de la zone.
